# EUROPEAN PATENT SPECIFICATION

(11) **EP 0 569 731 B1**
(45) Date of publication and mention of the grant of the patent: **09.12.1998**
(21) Application number: 93106185.7
(22) Date of filing: 16.04.1993
(51) Int. Cl.: C07F 9/38, C02F 5/14

(54) **Water treatment agent**
Mittel zur Wasserbehandlung
Agent pour le traitement de l'eau

(30) Priority: 16.04.1992 GB 9208390; 16.06.1992 GB 9212748
(43) Date of publication of application: 18.11.1993
(73) Proprietor: ALBRIGHT & WILSON UK LIMITED, Oldbury, Warley, West Midlands B68 0NN (GB)
(72) Inventor: Williams, Michael John, Bridgnorth, Shropshire, WV15 4DR (GB); Davis, Keith Philip, Stourbridge, West Midlands, DY2 6BP (GB); Greenhall, Martin Paul, Northfield, Birmingham B31 1AF (GB); Woodward, Gary, Hereford and Worcester, DY10 3AH (GB); Hoye, Peter Albert Theodore, Stourbridge, West Midlands, DY7 6LL (GB)
(74) Representative: Savidge, Roger Gordon Madgwick

(56) References cited:
- EP-A- 0 451 596
- EP-A- 0 491 391
- DE-A- 3 142 517

## Description

This invention relates to the reaction of water soluble active olefins or acetylenes, such as olefinic or acetylenic carboxylates or alcohol, with water soluble phosphite salts, in solution in an aqueous medium and in the presence as initiator of a source of free radicals, as described in our corresponding British Patent Application No. 9126859.9 corresponding to EP 91121737.0 and US Application Serial Number 07/809,960.

The aforesaid patent applications refer to the use of ammonium or alkali metal persulphate or peracetate, hydrogen peroxide, a hydroperoxide, chlorine dioxide, sodium chlorate, sodium hypochlorite, organotin hydrides, azo compounds such as 4,4'-azobiscyanovaleric acid, electrolysis, ultra violet or other ionising radiation or ultrasound as the source of free radicals.

The choice of initiator depends upon both economic and technical considerations. Persulphate salts are highly effective, and will initiate reaction under conditions in which most of the other free radical sources referred to above are relatively ineffective. However, persulphates have several disadvantages. They are expensive and they leave a residue of sodium sulphate and because of their activity they may catalyse side reactions which give inactive impurities. We have now discovered that the reaction between water soluble active olefins or acetylenes and water soluble phosphite salts can be initiated by hydrogen peroxide provided that the water content of the reaction mixture is below a critical limit. This limit is about 50% by weight of the reaction mixture which is generally less than the amount required to dissolve the reagents at room temperature. We have discovered that it is generally necessary to carry out the reaction at elevated temperatures in order the maintain a sufficiently fluid reaction mixture.

Our invention therefore provides a method of preparing a water soluble organic phosphonate which comprises reacting a water soluble olefinic or acetylenic carboxylate salt carboxylic anhydride or alcohol with a water soluble phosphite salt in the presence of water in a quantity less than 50% based on the weight of the reaction mixture, at a temperature sufficiently elevated to provide a stirrable reaction mixture, and to provide an acceptable reaction rate, at neutral or alkaline pH and in the presence of an amount of hydrogen peroxide effective to maintain the reaction.

The invention is also applicable to other peroxides and to free radical sources generally.

A particular advantage of the invention is the effectiveness and high yield of the product mixture. Stronger initiators such as persulphate tend to isomerise part of the active cis olefins to less active trans olefins.

Thus maleates are partially isomerised to fumarates which do not undergo phosphonation to any significant extent under normal reaction conditions.

The amount of water present initially, is preferably less than 40% by weight based on the total weight of the reaction mixture, eg, less than 35% especially less than 32%. Generally we prefer that the amount of water be greater than 10%, preferably greater than 15% eg, greater than 20% most preferably greater than 25% by weight based on the total weight of the reaction mixture.

The proportion of peroxide is typically an effective amount up to 25% molar, based on the unsaturated compound. We prefer to use only sufficient peroxide to initiate the reaction to a substantial extent, eg, to provide yields of phosphonated product greater than 70% molar based on the unsaturated compound preferably greater than 80% molar eg, greater than 85% molar. This minimum amount of peroxide depends on the amount of water and is generally reduced as the amount of water is reduced. For example at 30%wt/wt water, yields of about 90% can be obtained using between 4 and 6 mole % of peroxide based on the unsaturated compound.

The temperature of the reaction is preferably above 60°C more preferably 70°C, typically at the boiling point of the mixture. Rapid refluxing and agitation favour the reaction, and we therefore prefer to carry out the process under conditions which promote rapid evaporation such as a wiped film or spray evaporator, preferably incorporated in a loop reactor.

Thus the reaction mixture may be continuously recycled through an evaporator and reagents and catalyst continuously or intermittently added.

The ratio of unsaturated compound to phosphite typically determines the proportion and mean degree of polymerisation of any dimer or higher polymers formed. We prefer to use molar ratios greater than 1 but preferably less than 2 eg, 1.2 to 1.5 eg, 1.3.

We have found high pH an advantage. Generally the pH should be above 5, suitably above 7, preferably above 7.5, more preferably above 8, especially above 8.5 eg, 8.5 to 9.5.

If it is desired to purify the product, eg, by separating phosphonated monomer from the phosphonated oligomers, it is possible to esterify the products to form, eg, methyl esters and distil off the phosphonated monomer. However an advantage of the present method is that expensive purification of the reaction product is generally not necessary. The mixture is an effective water treatment agent in its own right, and we believe that its efficiency is enhanced by synergism between at least some of its different components.

The Applicant has separated the phosphonated dimer of maleic acid (1-phosphono-1,2 3,4-tetracarboxy butane) from the reaction mixture using the esterification and distillation described above. The saponified ester is substantially more active than phosphono succinate, both as a corrosion inhibitor and as a scale inhibitor. However a strong synergism is observed between the dimer and the phosphono succinate.

The synergism is especially marked in respect of corrosion inhibition by mixtures containing from 8 to 65% by weight of the dimer based on the total weight of the mixture of phosphono succinate and dimer.

We particularly prefer mixtures containing from 10 to 60% by weight of the dimer based on total phosphonated and more especially 12 to 50%.

We have further discovered that addition to the mixture of phosphono succinate and dimer of 2 to 6% eg. 3 to 5% by weight of phosphate, such as is typically present in the reaction product according to the present invention, also synergistically enhances the performance of the product.

Products according to our invention may contain minor amounts of higher oligomers such as 1-phosphono- 1, 2, 3, 4, 5, 6-hexacarboxy hexane.

The invention is illustrated by the following example.

### Example 1

A solution of maleic acid (116g, 1.0M), phosphorous acid (63.1g 0.77M) and sodium hydroxide (301g of a47% w/w solution) in water (230ml) was heated to reflux and water distilled from the reaction mixture until a mixture that contained 30% water was obtained. Hydrogen peroxide (19.4g of a 35% solution) was added then dropwise over 1h to the stirred refluxing mixture. An exothermic reaction was observed after which the reaction mixture was diluted with water to obtain a ca.50% solution. 31-P n.m.r. spectroscopy of the reaction mixture indicated that ca. 96mol% of the phosphorous acid had reacted to give organophosphorous materials. 13-C n.m.r. data indicated that >95% of the maleic acid had reacted.

The product was analysed by ion chromatography using a "DIONEX" (Registered Trade Mark) 440i ion chromatograph equipped with a gradient pump, conductivity detector of sensitivity 30us, UV detector (wavelength 215mm, sensitivity 1.0aufs) anion membrane suppressor and column oven, with AS5a analytical column and AG5a guard column, employing the following concentration gradient:-

| | % H₂O | % 400mM Na OH |
|---|---|---|
| Initial | 95 | 5 |
| 20 mins | 50 | 50 |
| 30 mins | 50 | 50 |

The run time was 30 mins at a flow rate of 1.0ml/min, regenerant flow 4.0ml/min, column temperature 40°C and sample concentration 50mg in 50ml H₂O.

The analysis gave a peak at 8.82 mins which has been positively identified as due to phosphate and one at 12.65 mins identified as phosphonosuccinate. Peaks at 16.65, 17.68 and 18.77 were attributed to different diastereomers of the phosphonated dimer.

### Example 2

A sample of the material described in Example 1 was converted to the free acid by precipitation/filtration of sodium chloride with excess conc. HCl and methanol. After removal of the excess HCl by evaporation, an aqueous solution of the remaining material was stirred with an ion exchange resin (Amberlite resin IR - 120(H) 0.3-1.18mm) to remove as much residual sodium as possible. This material was freeze dried and then boiled with a large excess of trimethylorthoformate until no further methylation was observed (by phosphorus n.m.r.). Evaporation of the excess trimethylorthoformate yielded a dark brown oil which was high vacuum distilled (max. head temp.) was 155 degrees at ca. 3mmHg). This yielded 42.2g of distilled material (phosphorus n.m.r. spectroscopy indicated that this material was tetramethyl-phosphonosuccinate with a small amount of trimethylphosphate) from 67.7g of methylated material. The undistilled dark brown/black residue was added to conc. HCl and boiled for 5h. Treatment with activated charcoal, filtration and then evaporation of the filtrate yielded 10.7g of a solid yellow material.

### Example 3

Sodium hydroxide (262.1g of a 47%w/w solution, 3.08M) was added dropwise to a solution of phosphorous acid (126.3g, 1.54M) in water (415ml). After this addition maleic anhydride (196g, 2.0M) was added slowly over 0.5h then a further 340.4g of sodium hydroxide (47%w/w, 4M) was added dropwise followed by a further 15ml of water. The reaction mixture was adjusted to ca. pH 9 with sodium hydroxide and then water (600g) was distilled from the mixture to obtain a ca. 68% solids solution. Hydrogen peroxide (9.7g of a 35% solution) was then added over 1.5h to the stirred refluxing reaction mixture. The mixture was further refluxed for 0.25h and then, after cooling, water (ca. 270ml) was added to obtain a ca. 50% solution. Phosphorus n.m.r. spectroscopy indicated that ca. 95mol% of the phosphorous acid had reacted to give organophosphorus material and the remainder had been oxidised to phosphate.

### Example 4

A solution of maleic acid (58g, 0.5M), phosphorous acid (31.6g, 0.39M), sodium hydroxide (150.2g of a 47% solution), 257g of a 50% solution of Example One (adjusted to pH 9.0 and ca. 92% pure by phosphorus n.m.r. spectroscopy) and water (115ml) was heated to reflux and 245g of water distilled out to obtain a ca. of 70% solids solution. To this stirred refluxing mixture hydrogen peroxide (5-6mol% w.r.t. maleate) was added over 20 mins. The reaction mixture was then cooled. Phosphorus n.m.r. spectroscopy indicated a total yield of 94% of organophosphorus material.

### Example 5

184g of a 70% solution of the material prepared in Example One was heated to reflux. Over a period of 1h 40min a solution of maleic acid (58g, 0.5M), Phosphorous acid (31.6, 0.39M), sodium hydroxide (150.5g of a 47% solution) in water (115ml) was added dropwise. Simultaneously, hydrogen peroxide (4.8g of a 35% solution) was added and water (177g) was distilled out over the addition period. After the additions a further 1.5g of hydrogen peroxide was added dropwise over 20mins to the refluxing reaction mixture. Phosphorus n.m.r. spectroscopy indicated a ca. 92mol% yield of organophosphorus material.

### Example 6

The separated phosphonated dimer product of Example 2 was mixed with sodium phosphonosuccinate in varying proportions. Each of the mixtures was subjected to a calcium corrosion inhibition test (120ppm. Ca⁺⁺, 60ppm total inhibitor, pH 7.5, 25°C). The results are set out in Table 1. The example illustrates the strong synergism between phosphonosuccinic acid and the dimer.

**TABLE 1**

| **% dimer in mixture** | **Corrosion Rate (mm/yr)** |
|---|---|
| 0 | 0.092 |
| 10 | 0.044 |
| 20 | 0.042 |
| 30 | 0.042 |
| 40 | 0.042 |
| 50 | 0.042 |
| 60 | 0.047 |
| 70 | 0.05 |
| 80 | 0.05 |
| 90 | 0.05 |
| 100 | 0.05 |

## Claims

1. A method of preparing a water soluble organic phosphonate which comprises reacting a water soluble olefinic or acetylenic carboxylate salt or alcohol with a water soluble phosphite salt in an aqueous solution in the presence of free radicals, wherein : the quantity of water is less than 50% based on the weight of the reaction mixture, but sufficient to form a stirrable reaction mixture at an elevated temperature; the reaction is carried out at a temperature sufficient to provide a stirrable reaction mixture; and the free radicals are provided by adding sufficient hydrogen peroxide to maintain the reaction.

2. A method according to Claim 1, wherein the pH of the reaction mixture is above 7.

3. A method according to Claim 2, wherein the pH of the reaction mixture is from 8 to 10.

4. A method according to Claim 1, wherein the proportion of water is from 15% to 40% by weight based on the total weight of the reaction mixture.

5. A method according to Claim 4, wherein the proportion of water is from 20 to 36% by weight based on the total weight of the reaction mixture.

6. A method according to Claim 1, wherein the temperature of the reaction mixture is from 60°C to boiling point.

7. A method according to Claim 6, wherein the reaction mixture is boiled under reflux.

8. A method according to Claim 1, wherein the proportion of hydrogen peroxide is from 0.5% to 20% molar based on the unsaturated compound.

9. A method according to Claim 8, wherein the proportion of hydrogen peroxide is from 1 to 10% molar based on the unsaturated compound.

10. A method according to Claim 1, wherein the unsaturated compound is an alkali metal maleate.

11. A method according to Claim 10, wherein the mole ratio of the maleate to the phosphite is from 1.2 to 1.5:1.

12. A method for preparing a water treatment agent which comprises reacting a water soluble alkali metal maleate and a water soluble alkali metal phosphite in a mole ratio of from 1.2 to 1.5:1, at a temperature above 60°C in a boiling aqueous solution containing from 20 to 36% by weight of water based on the total weight of the reaction mixture and from 1 to 10% molar hydrogen peroxide based on the maleate.

13. A method according to Claim 12, wherein the pH is from 8 to 10.

## Patentansprüche

1. Verfahren zur Herstellung eines wasserlöslichen organischen Phosphonates,
wobei ein wasserlösliches olefinisches oder acetylenisches Carboxylatsalz oder ein wasserlöslicher olefinischer oder acetylenischer Alkohol mit einem wasserlöslichen Phosphitsalz in wässriger Lösung in Gegenwart freier Radikale umgesetzt werden,
dadurch gekennzeichnet, daß
der Wassergehalt weniger als 50 % des Gewichtes des Reaktionsgemisches ausmacht, jedoch ausreichend hoch ist, um bei erhöhter Temperatur ein rührbares Reaktionsgemisch zu bilden;
die Umsetzung bei einer ausreichend hohen Temperatur durchgeführt wird, um ein rührbares Reaktionsgemisch zu bilden; und
die freien Radikale bereitgestellt werden durch Zugabe einer ausreichenden Menge Wasserstoffperoxid, um die Umsetzung aufrecht zu erhalten.

2. Verfahren nach Anspruch 1,
dadurch gekennzeichnet, daß
der pH-Wert des Reaktionsgemisches oberhalb 7 gehalten wird.

3. Verfahren nach Anspruch 2,
dadurch gekennzeichnet, daß
der pH-Wert des Reaktionsgemisches im Bereich zwischen 8 und 10 gehalten wird.

4. Verfahren nach Anspruch 1,
dadurch gekennzeichnet, daß
der Wassergehalt im Bereich von 15 bis 40 Gew.-% gehalten wird, bezogen auf das Gesamtgewicht des Reaktionsgemisches.

5. Verfahren nach Anspruch 4,
dadurch gekennzeichnet, daß
der Wassergehalt im Bereich von 20 bis 36 Gew.-% gehalten wird, bezogen auf das Gesamtgewicht des Reaktionsgemisches.

6. Verfahren nach Anspruch 1,
dadurch gekennzeichnet, daß
die Temperatur des Reaktionsgemisches im Bereich von 60° C bis zu dessen Siedepunkt gehalten wird.

7. Verfahren nach Anspruch 6,
dadurch gekennzeichnet, daß
das Reaktionsgemisch am Sieden unter Rückfluß gehalten wird.

8. Verfahren nach Anspruch 1,
dadurch gekennzeichnet, daß
der Anteil an Wasserstoffperoxid bei 0,5 bis 20 Mol-% gehalten wird, bezogen auf die ungesättigte Verbindung.

9. Verfahren nach Anspruch 8,
dadurch gekennzeichnet, daß
der Anteil an Wasserstoffperoxid bei 1 bis 10 Mol-% gehalten wird, bezogen auf die ungesättigte Verbindung.

10. Verfahren nach Anspruch 1,
dadurch gekennzeichnet, daß
die ungesättigte Verbindung ein Alkalimetallmaleat ist.

11. Verfahren nach Anspruch 10,
dadurch gekennzeichnet, daß
das Molverhältnis von Maleat zu Phosphit im Bereich von 1,2 bis 1,5 : 1 gehalten wird.

12. Verfahren zur Herstellung eines Mittels zur Wasserbehandlung,
dadurch gekennzeichnet, daß
ein wasserlösliches Alkalimetallmaleat und ein wasserlösliches Alkalimetallphosphit in einem Molverhältnis von 1,2 bis 1,5 : 1 umgesetzt werden bei einer Temperatur oberhalb 60° C in einer siedenden wässrigen Lösung, die 20 bis 36 Gew.-% Wasser enthält, bezogen auf das Gesamtgewicht des Reaktionsgemisches, und die weiterhin 1 bis 10 Mol-% Wasserstoffperoxid enthält, bezogen auf das Maleat.

13. Verfahren nach Anspruch 12,
dadurch gekennzeichnet, daß
der pH-Wert im Bereich von 8 bis 10 gehalten wird.

## Revendications

1. Procédé de préparation d'un phosphonate organique soluble dans l'eau, qui comprend la réaction d'un carboxylate ou alcool oléfinique ou acétylénique, soluble dans l'eau, avec un phosphite soluble dans l'eau, en solution aqueuse, en présence de radicaux libres, dans laquelle la quantité d'eau est inférieure à 50% sur base du poids du mélange réactionnel, mais suffisamment pour fournir un mélange réactionnel pouvant être agité à une température élevée, la réaction étant réalisée a une température suffisante pour fournir un mélange réactionnel pouvant être agité, et les radicaux libres sont fournis en ajoutant suffisamment de peroxyde d'hydrogène pour maintenir la réaction.

2. Procédé selon la revendication 1, dans lequel le pH du mélange réactionnel est supérieur à 7.

3. Procédé selon la revendication 2, dans lequel pH du mélange réactionnel est compris dans l'intervalle allant de 8 à 10.

4. Procédé selon la revendication 1, dans lequel la proportion d'eau est comprise entre 15% et 40% en poids, sur base du poids total du mélange réactionnel.

5. Procédé selon la revendication 4, dans lequel la proportion d'eau est comprise entre 20% et 36% en poids, sur base du poids total du mélange réactionnel.

6. Procédé selon la revendication 1, dans lequel la température du mélange réactionnel est comprise entre 60°C et le point d'ébullition.

7. Procédé selon la revendication 6, dans lequel le mélange réactionnel est porté au reflux.

8. Procédé selon la revendication 1, dans lequel la proportion de peroxyde d'hydrogène est comprise entre 0,5% et 20% en moles, sur base du composé insaturé.

9. Procédé selon la revendication 8, dans lequel la proportion de peroxyde d'hydrogène est comprise entre 1% et 10% en nioles, sur base du composé insaturé.

10. Procédé selon la revendication 1, dans lequel le composé insaturé est un maléate de métal alcalin.

11. Procédé selon la revendication 10, dans lequel le rapport molaire du maléate au phosphite se situe dans l'intervalle allant de 1,2 à 1,5:1.

12. Procédé de préparation d'un agent de traitement de l'eau, qui comprend la réaction d'un maléate de métal alcalin, soluble dans l'eau, et d'un phosphite de métal alcalin, soluble dans l'eau en un rapport molaire situé entre 1,2 et 1,5:1, à une température supérieure à 60°C, en solution aqueuse bouillante contenant de 20 à 36% en poids d'eau, sur base du poids total du mélange réactionnel et de 1 à 10% en moles de peroxyde d'hydrogène, sur base du maléate.

13. Procédé selon la revendication 12, dans lequel le pH est compris dans l'intervalle allant de 8 à 10.
